# FASCICULE DE BREVET EUROPEEN

(11) **EP 1 711 556 B1**
(45) Date de publication et mention de la délivrance du brevet: **27.05.2009**
(21) Numéro de dépôt: 04816415.6
(22) Date de dépôt: 17.12.2004
(51) Int. Cl.: C08K 5/49

(54) **SYSTEME IGNIFUGEANT A BASE DE COMPOSES DU PHOSPHORE ET COMPOSITION POLYMERIQUE IGNIFUGEE**
FLAMMSCHUTZSYSTEM AUF BASIS VON PHOSPHORVERBINDUNGEN UND FLAMMWIDRIGE POLYMERZUSAMMENSETZUNGEN
FIRE-RETARDANT SYSTEM BASED ON PHOSPHOROUS COMPOUNDS AND FIRE SEALING POLYMERIC COMPOSITIONS

(30) Priorité: 19.12.2003 FR 0314993
(43) Date de publication de la demande: 18.10.2006
(73) Titulaire: RHODIA CHIMIE, 92100 Boulogne Billancourt (FR)
(72) Inventeur: COUILLENS, Xavier, F-31170 Tournefeuille (FR); LEITE, Lorraine, F-75020 Paris (FR); ZANETTO, Jean-Emile, F-75009 Paris (FR)
(74) Mandataire: Seugnet, Jean Louis
(86) Numéro de dépôt international: PCT/FR2004/003280
(87) Numéro de publication internationale: WO 2005/061605

(56) Documents cités:
- WO-A-03/062312
- US-A1- 2003 018 107
- US-B1- 6 547 992

## Description

La présente invention concerne un système ignifugeant pour matière polymérique et des compositions ignifugées à base de matière polymérique.

Elle concerne plus particulièrement un système ignifugeant comprenant comme agent ignifugeant des composés contenant du phosphore.

Dans certains domaines, tels que celui de la fabrication de surfaces textiles, l'ignifugation de ces surfaces est réalisée par un traitement avec des composés ignifugeants liquides ou solubles consistant à déposer les dits composés sur la surface du textile ou des fibres et fils le constituant.

Dans ces applications, les agents ignifugeant liquides à base de phosphore, et en particulier, les esters et sels d'acides phosphoriques, phosphiniques ou phosphoniques sont souvent utilisés.

Ces traitements sont généralement réalisés à des températures inférieures à 200°C.

Ces agents ignifugeants peuvent également être utilisés pour ignifuger différents matériaux. Pour certaines de ces applications, il est nécessaire de porter l'agent ignifugeant à des températures élevées, notamment supérieure à 200°C, par exemple, pour les mélanger au matériau polymérique. Toutefois, ce chauffage à température supérieure à 200 °C entraîne des modifications de l'agent ignifugeant qui peuvent présenter des inconvénients pour les propriétés du matériau polymérique. Ainsi, les modifications de l'agent ignifugeant peuvent générer la formation de composés colorés, affectant l'aspect du matériau polymérique, ou des composés pouvant réagir avec d'autres produits présents dans le matériau polymérique ou la composition contenant ledit matériau.

Un des buts de la présente invention est notamment de remédier à ces inconvénients en proposant un nouveau système ignifugeant à base notamment d'agents ignifugeants cités ci-dessus qui ne génère plus de produits secondaires ou pro-dégradants quand il est porté à des températures supérieures à 200°C.

A cet effet, l'invention propose un système ignifugeant notamment pour matériaux polymériques et composition à base de matériaux polymériques. Ce système ignifugeant comprend comme agent ignifugeant au moins un composé appartenant à la famille des esters et sels d'acides phosphoriques, phosphiniques et phosphoniques imprégné sur un support solide poreux, et au moins un autre composé stabilisant de l'agent ignifugeant.

Cette stabilisation peut être obtenue, par exemple, par neutralisation totale ou partielle des fonctions acides présentes dans l'agent ignifugeant.

En effet, les esters et sels d'acides phosphoriques, phosphiniques et phosphoniques sont obtenus par des procédés conduisant à des produits contenant de l'acidité libre.

Ainsi, les composés tels que les composés phosphoriques, par exemple, peuvent contenir une quantité d'acide libre élevée, qui est évaluée par dosage potentiométrique et exprimée en mg de KOH par mg de produit. Ainsi, ces composés peuvent contenir jusqu'à 10mg de KOH par mg de produit.

Selon une caractéristique de l'invention, le composé stabilisant présente avantageusement un caractère basique qui lui permet de neutraliser ou bloquer l'acidité présente dans l'agent ignifugeant. Ce composé stabilisant doit également pouvoir être mis en oeuvre à des températures élevées, notamment supérieures à 200°C. En effet, ce composé stabilisant est ajouté dans les matériaux polymériques ou compositions quand ceux-ci sont en fusion ou au moins sera porté à la température de fusion de ces matériaux et à leur température de mise en forme.

Selon l'invention, les composés stabilisants convenables pour l'invention sont choisis dans le groupe comprenant les carbonates de métaux alcalins et alcalino-terreux, les hydrotalcites, les aluminosilicates, plus généralement les composés minéraux à caractère basique qui peuvent être dispersés sous forme de particules de taille inférieure à 1 mm dans un matériau polymérique.

Selon l'invention, la présence dans la matière ou la composition ignifugée de l'agent ignifugeant et du composé, appelé ci-après agent stabilisant pour plus de clarté, permet de diminuer voir de supprimer les inconvénients générés par l'instabilité des agents ignifugeants aux températures de mise en forme des compositions.

Comme agent stabilisant convenable pour l'invention, on cite également les composés de condensation de la mélamine tels que le mélem, le mélam, le mélon, leurs mélanges, les dérivés de mélamine comme le cyanurate, les phosphates et polyphosphates ou les mélanges de ces composés entre eux ou avec de la mélamine. Ces additifs ont notamment un effet stabilisant par un mécanisme qui peut être semblable ou différent de celui décrit ci-dessus.

Les différents additifs stabilisants décrits ci-dessus peuvent également avoir d'autres effets sur les propriétés de la composition les comprenant. Ainsi, les propriétés d'ignifugation apportées par le composé phosphoré peuvent être améliorées. De même certaines propriétés mécaniques et physico-chimiques peuvent être modifiées.

Selon une caractéristique de l'invention, le rapport en poids entre le composé stabilisant et l'agent ignifugeant comprenant du phosphore est compris entre 30 % et 80 %

Selon l'invention, les deux composés, agent ignifugeant et agent stabilisant, peuvent être prémélangés avant leur introduction dans la matière polymérique à ignifuger.

Il est également possible d'ajouter séparément les deux composés dans la matière à ignifuger.

Toutefois, dans ce mode de réalisation, le composé stabilisant sera avantageusement ajouté avant le composé ignifugeant contenant le phosphore.

Le composé contenant du phosphore ou agent ignifugeant est imprégné sur un support solide poreux. Dans ce cas, le rapport pondéral indiqué précédemment est déterminé entre le poids d'agent stabilisant et le poids de composés contenant du phosphore imprégné sur le support poreux.

Dans ce mode de réalisation, il est possible d'imprégner également le composé stabilisant sur le support poreux soit simultanément au composé contenant du phosphore soit selon des étapes d'imprégnation successives.

Par imprégnation, on entend que le composé ignifugeant est lié au moins temporairement au substrat solide par tout type de liaison tel qu'absorption dans la structure poreuse de la particule si celle-ci existe, mouillage ou adsorption du composé ignifugeant à la surface des particules par au moins une couche du composé ignifugeant ou fixation ou greffage du composé ignifugeant à la surface des particules par des liaisons chimiques ou physico-chimiques.

Ainsi, une telle adsorption ou fixation est facilitée par le choix d'un substrat solide présentant des propriétés de surface compatibles avec les propriétés du composé ignifugeant. Par exemple, un substrat à propriété de surface hydrophile est avantageusement associé avec un composé ignifugeant à caractère hydrophile et inversement pour les composés à caractère hydrophobe.

Par ailleurs, la particule du substrat solide peut avantageusement comprendre des éléments, des radicaux qui favorisent l'adsorption du composé ignifugeant à la surface de ladite particule.

Par substrat solide ou support poreux, on entend, préférentiellement un substrat minéral solide à la température de transformation des matières polymériques et plus particulièrement un oxyde minéral.

L'oxyde minéral peut être choisi parmi la silice, l'alumine, la silice-alumine, le silico-aluminate de sodium, le silicate de calcium, le silicate de magnésium, la zircone, l'oxyde de magnésium, l'oxyde de calcium, l'oxyde de cérium ou l'oxyde de titane. L'oxyde minéral peut être complètement ou partiellement hydroxylé ou carbonaté.

Parmi ces substrats, ceux qui peuvent être dispersés dans la matière thermoplastique sous forme de particules ou agrégats de faible diamètre, avantageusement pour obtenir des particules dispersés présentant un diamètre ou taille inférieur à 5 µm, et encore plus avantageusement qu'au moins 80% en nombre des particules dispersées présentent un diamètre ou taille inférieur à 1 µm.

Une telle dispersion peut être obtenue par mélange des particules présentant déjà de telles caractéristiques de taille dans la matière polymérique ou plus avantageusement par utilisation de granulés ou agglomérats de substrats formés par l'agglomération de particules ou agrégats dont au moins 80% en nombre présentent un diamètre ou une taille inférieur à 1 µm . Ces granulés ou agglomérats, après addition dans la matière polymérique et sous l'action des forces de cisaillement appliquées pour réaliser la dispersion, se désagrègent en agrégats ou particules élémentaires, permettant ainsi d'obtenir une très bonne dispersion de l'agent ignifugeant dans le polymère ou la matière polymérique.

Dans ce dernier mode de réalisation, les agglomérats ou granulés présentent, de préférence, une surface spécifique élevée et une porosité entre les agrégats ou particules élémentaires importante pour permettre au composé ignifugeant de s'adsorber au moins à la surface des agrégats ou particules. Les agrégats ou particules peuvent également présenter une porosité permettant l'absorption du composé ou agent ignifugeant.

Dans ce mode de réalisation le diamètre ou taille moyen des granulés ou agglomérats n'est pas critique et est avantageusement choisi pour pouvoir manipuler aisément la composition à propriétés ignifugeantes, notamment lors de son addition dans la matière polymérique. En outre, le diamètre ou taille moyen de ces granulés est également choisi pour faciliter l'addition et l'adsorption du composé ignifugeant, par exemple, pour éviter un collage entre les différents granulés. De ce fait, le composé ignifugeant peut être ajouté sous forme d'une poudre présentant une bonne coulabilité et sans générer de poussière.

A titre indicatif, des granulés de diamètre moyen D50 supérieur à 60 µm, avantageusement compris entre 80 µm et 300 µm sont préférés.

Parmi les substrats minéraux cités précédemment certaines silices présentent ces caractéristiques et sont donc particulièrement préférées.

Ainsi, certaines silices présentant la propriété de se disperser sous forme de particules ou agrégats de diamètre ou taille compris entre 0,05 µm et 1 µm seront préférées pour la mise en oeuvre de la présente invention.

En outre, les substrats minéraux particulièrement convenables pour l'invention sont ceux dont les granulés ou agglomérats présentent une porosité et une surface spécifique élevées. Ainsi, les substrats préférés sont ceux dont les granulés présentent un volume poreux total au moins égal à 0,5 ml/g, de préférence au moins égal à 2 ml/g. Ce volume poreux est mesuré par la méthode de porosimètrie au mercure avec un porosimètre MICROMERITICS Autopore III 9420, selon le mode opératoire suivant :

L'échantillon est préalablement séché pendant 2 heures en étuve de 200°C. Les mesures sont en suite effectuées selon la procédure décrite dans le manuel fourni par le constructeur. Les diamètres ou tailles de pores sont calculés par la relation de WASHBURN avec un angle de contact téta égal à 140°C et une tension superficielle gamma égale à 485 Dynes/cm.

Avantageusement, les substrats minéraux ou supports poreux présentant un volume poreux d'au moins 0,50 ml/g pour les pores dont le diamètre ou la taille est égal ou inférieur à 1 µm sont préférés.

Selon un mode de réalisation préféré de l'invention le substrat minéral est une silice, avantageusement une silice amorphe. Les silices sont obtenues par différents procédés dont deux principaux conduisant à des silices appelées silice précipitée et silice de combustion. La silice peut également être préparée sous forme de gel.

Les silices présentant une surface spécifique mesurée selon la méthode CTAB, supérieure à 50 m²/g sont préférées.

Les silices précipitées sont préférées car elles peuvent se présenter sous forme de particules agglomérées formant des granulés de taille d'au moins 50 µm ou supérieur à 150 µm.

Elles peuvent se présenter sous forme de billes ou granulés sensiblement sphériques, obtenues par exemple par atomisation, comme décrit dans le brevet européen n ° 0018866. Cette silice est commercialisée sous une appellation générique de MICROPERLE. De telles silices qui présentent des propriétés remarquables de coulabilité, de dispersabilité et une capacité d'imprégnation élevée sont notamment décrites dans les brevets européens 966207, 984772, 520862 et les demandes internationales WO95/09127 et WO95/09128.

D'autres types de silices peuvent convenir à l'invention, comme celles décrites dans la demande de brevet français n°01 16881 qui sont des silices pyrogènées ou des silices partiellement deshydroxylées par calcination ou traitement de surface.

Ces exemples de silices utilisées comme substrat minéral solide ne sont décrits qu'à titre indicatif et comme modes de réalisation préférés. On peut également utiliser d'autres silices obtenues par d'autres procédés présentant des propriétés de porosité et de dispersabilité convenables pour réaliser l'invention.

Selon l'invention, l'additif ignifugeant comprend un composé ignifugeant adsorbé sur les particules de substrat minéral. Dans un mode de réalisation préféré de l'invention, cette adsorption est obtenue par imprégnation des granulés ou agglomérats. Cette imprégnation est réalisée par tout moyen classique et, par exemple, par mélange du substrat avec le composé ignifugeant à l'état liquide ou sous forme dispersée ou solubilisée dans un solvant. Dans ce dernier cas, le solvant sera éliminé, après imprégnation du substrat, par évaporation.

Par un composé ou agent ignifugeant, il faut comprendre un ou plusieurs composés ignifugeants, ou un mélange de composés formant un système présentant des propriétés ignifugeantes.

L'oxyde minéral est, préférentiellement, de la silice précipitée, il peut s'agir par exemple d'une silice commercialisée sous les dénominations commerciales Tixosil 38A, Tixosil 38D ou Tixosil 365 de la société RHODIA.

La silice précipitée peut être une silice hautement dispersible, comme les silices décrites dans les documents EP 520862, WO 95/09127 ou WO 95/09128, ce qui facilite sa dispersion dans le polymère et a un effet positif sur les propriétés mécaniques du matériau obtenu. Il peut s'agir par exemple d'une silice commercialisée sous les appellations commerciales Z1165 MP ou Z1115 MP de la société Rhodia.

En particulier la silice précipitée peut se présenter sous forme de billes sensiblement sphériques, notamment de taille moyenne d'au moins 80 microns, par exemple d'au moins 150 microns, obtenues au moyen d'un atomiseur à buses, comme décrit par exemple dans le document EP 0018866. Il peut s'agir par exemple de silice appelée Microperle. Cette forme permet d'optimiser la capacité d'imprégnation et la coulabilité de la poudre comme cela est décrit par exemple dans les documents EP 966207 ou EP 984772. Il peut s'agir par exemple d'une silice Tixosil 38X ou Tixosil 68 de la société Rhodia.

Dans ce mode de réalisation et selon la nature de l'agent stabilisant, celui-ci peut être mélangé aux particules solides sur lesquelles est imprégné l'agent d'ignifugation. Il est également possible de co-imprégner l'agent ignifugeant et l'agent stabilisant sur les particules solides poreuses.

Le composé contenant du phosphore ou agent ignifugeant est avantageusement un agent liquide à température ambiante (environ 25°C). Cet agent liquide peut être choisi parmi tous les agents ignifugeants liquides connus par l'homme de l'art, à l'exception de l'acide orthophosphorique ou de l'acide polyphosphorique.

On peut citer notamment les agents ignifugeants liquides à base de phosphore tels que les acides phosphoniques leurs esters et sels, esters phosphoriques ou les acides phosphiniques leurs esters et sels.

En particulier on peut utiliser des agents ignifugeants liquides qui sont visqueux, qui collent et /ou sont difficiles à manipuler ou nettoyer.

Par liquide visqueux on entend tout liquide qui a une viscosité supérieure à 100 centipoises à une température de 25°C, de préférence plus de 1000 centipoises à une température de 25°C, et de manière encore plus préférentielle plus de 10000 centipoises à une température de 25°C, cette viscosité étant mesurée par un appareil de type Brookfield avec un mobile et une vitesse de rotation adaptée à la viscosité mesurée. On utilise par exemple, un mobile cylindrique et une vitesse de rotation de 50 tr/mn dans le cas où la viscosité est voisine de 100 centipoises.

Comme composés ignifugeants convenables pour l'invention, on peut citer, à titre d'exemple, le méthyl ester de l'acide phosphonique methyl-, bis[(5-ethyl-2-methyl-2-oxido-1,3,2-dioxaphosphorinan-5-yl)methyl] de formule suivante : 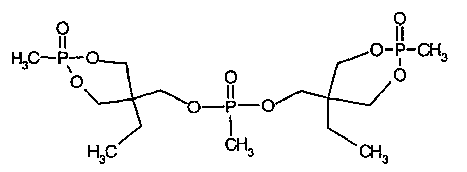 seul ou en mélange avec le méthyl ester de l'acide phosphonique methyl-, (5-ethyl-2-methyl-2-oxido-1,3,2-dioxaphosphorinan-5-yl)methyl de formule suivante : 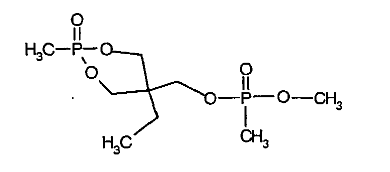 , le résorcinol bis (diphényl phosphate), le bisphénol A bis (diphényl phosphate), les esters de polyphosphates, l'acide diéthyl phosphinique, l'acide éthylméthyl phosphinique, l'acide méthyl-n-propyl phosphinique leurs mélanges, esters et sels.

On peut citer à titre d'illustration des liquides visqueux commercialisés sous les appellations commerciales AMGARD 1045 ( mélange d'acide methyl-bis((5-éthyl-2-méthyl-1,3,2-dioxaphosphorinan) phosphonique et d'acide méthyl-(5-éthyl-2-méthyl-2-oxido-1,3,2-dioxaphospho) phosphonique) commercialisé par la société Rhodia dont la viscosité indiquée sur les fiches commerciales est de 500 000 centipoises à 25°C et de 1000 centipoises à 110°C) ; Fyrolflex RDP (résorcinol bis(diphenyl phosphate)) commercialisé par la société Akzo , dont la viscosité indiquée sur les fiches commerciales est de 600 centipoises à 25°C, et le Fyrolflex BDP(Bisphénol A bis(diphenyl phosphate)) commercialisé par la société Akzo , dont la viscosité indiquée sur les fiches commerciales est de 12450 centipoises à 25°C.

A titre d'illustration, on peut également citer les composés ou compositions commercialisés par la société Rhodia sous la dénomination commerciale AMGARD CU ou AMGARD CT, dont la viscosité indiquée sur les fiches commerciales est de 500 000 centipoises à 25°C et de 1000 centipoises à 110°C et qui contiennent des produits contenus dans l'AMGARD 1045 en proportions différentes, les dérivés des esters diphénylphosphates commercialisés par la société AKZO sous la dénomination FYROLFLEX dont la viscosité indiquée sur les fiches commerciales est de 12450 centipoises à 25°C ou la société GREAT LAKES CHEMICAL Corp sous la dénomination RHEOPHOS DP. Enfin, la société DAIHACHI CHEMICAL INDUSTRY commercialise des esters polyphosphates sous les appellations CR 741, CR 733 et CR741S.

Comme indiqué précédemment, ces composés peuvent être imprégnés directement sur le substrat tel qu'une silice par exemple, ou mis en solution dans un solvant tel que, par exemple, l'eau, les solvants organiques tels que les cétones, alcools, éthers, hydrocarbures, solvants halogénés, par exemple.

La présente invention a aussi pour objet l'utilisation du système ignifugeant décrit ci-dessus pour l'ignifugation de différents matériaux polymériques notamment des polymères tels que les polymères thermoplastiques, les polymères thermodurcissables, les élastomères.

Lorsque le polymère ou le copolymère est thermoplastique, il peut s'agir d'un polymère choisi parmi les polyamides, les polycarbonates, les polyesters, les polymères styrèniques, les polymères acryliques, les polyoléfines, les polychlorures de vinyles et leurs dérivés, les polyphényles éthers, les polyuréthannes ou leurs mélanges.

Lorsque le polymère est un polyamide thermoplastique ou thermodurcissable, il est choisi dans le groupe comprenant les polyamides obtenus par polycondensation d'un diacide carboxylique linéaire avec une diamine linéaire ou cyclique comme le PA 6.6, PA 6.10, PA 6.12, PA 12.12, PA 4.6, MXD 6 ou entre un diacide carboxylique aromatique et une diamine linéaire ou aromatique comme les polytéréphtalamides, polyisophtalamides, polyaramides, les polyamides obtenus par polycondensation d'un aminoacide sur lui-même, l'amino-acide pouvant être généré par l'ouverture hydrolytique d'un cycle lactame tels que, par exemple PA 6, PA 7, PA 11, PA 12. On peut également utiliser des copolyamides dérivés notamment des polyamides ci-dessus, ou les mélanges de ces polyamides ou copolyamides.

On peut également utiliser les polyamides branchés, les polyamides étoiles.

Les polyamides préférés sont le polyhexaméthylène adipamide, le polycaprolactame, ou les copolymères et mélanges entre le polyhexaméthylène adipamide et le polycaprolactame. Lorsque le polymère est un polyester, il peut s'agir par exemple du polybutylène téréphtalate, du polypropylène téréphtalate ou du polyéthylène téréphtalate ou de leurs mélanges.

Lorsque le polymère est un polymère styrènique, il peut s'agir par exemple de polystyrène, de styrène-butadiène (SB), de polystyrène acrylonitrile (SAN), d'acrylonitrile butadiène styrène (ABS), ou leurs copolymères ou leurs mélanges.

Lorsque le polymère ou le copolymère est une polyoléfine, il peut être choisi par exemple parmi le polypropylène, le polyéthylène, le copolymère éthylène/acétate de vinyle (EVA) ou leurs mélanges.

Lorsque le polymère est thermodurcissable, il peut s'agir d'un polymère choisi parmi le polyuréthanne, les résines époxydes (comme l'araldite), les résines polyesters, les résines phénoliques (comme la bakélite), ou les aminoplastes (comme le formica).

Lorsque la composition ignifugeante de l'invention est ajoutée dans des polymères thermoplastiques (y compris les élastomères thermoplastiques), elle est incorporée par mélange, de préférence dans une extrudeuse monovis ou double vis. Le mélange est extrudé sous forme d'articles tels que profilés ou plus avantageusement sous forme de joncs qui seront coupés en granulés. Les granulés sont utilisés dans les procédés de réalisation d'articles comme matière première et seront fondus pour alimenter la composition ignifugée dans les procédés de mise en forme tels que procédés de moulage par injection, extrusion, extrusion soufflage ou analogue.

Le mélange peut comprendre également un ou plusieurs additifs habituellement utilisés dans ce domaine.

La quantité totale d'agent ignifugeant exprimée en poids de phosphore dans la composition varie de 1 à 20%, de préférence de 5 et 15% par rapport au poids total du mélange obtenu.

Lorsque l'oxyde minéral imprégné d'agent ignifugeant liquide est incorporé dans des polymères thermodurcissables, l'oxyde minéral imprégné d'agent ignifugeant liquide et les autres additifs sont avantageusement incorporés à l'un des monomères ou oligomères avant la réaction de polymérisation ou de réticulation. Les quantités d'oxyde minéral imprégné d'agent ignifugeant liquide utilisées sont comprises dans les mêmes proportions que celles décrites pour les polymères thermoplastiques.

Il est possible d'ajouter en outre tous les additifs généralement utilisés pour la fabrication de compositions utilisées par exemple pour la fabrication d'articles moulés notamment dans le domaine électrique.

A titre d'exemple, on peut citer les charges de renfort ou de remplissage, les additifs de stabilisation thermique ou de lumière, des additifs d'amélioration de résistance aux chocs, des pigments, colorants. Cette liste n'a aucun caractère limitatif.

D'autres détails et avantage de l'invention apparaîtront plus clairement au vu des exemples donnés ci-dessous uniquement à titre indicatif et en référence à la figure unique annexée représente une photographie des flacons utlisés pour le test de stabilisation..

### Exemples 1 à 4

50g de composés ignifugeants commercialisé sous l'appellation commerciale AMGARD 1045 sont mélangés avec 1 % en poids d'additif stabilisant. Le mélange est porté à 200°C sous reflux et agitation, sous pression atmosphérique, pendant 30 minutes.

Après refroidissement, la couleur finale du mélange permet de déterminer l'effet stabilisant de l'additif.

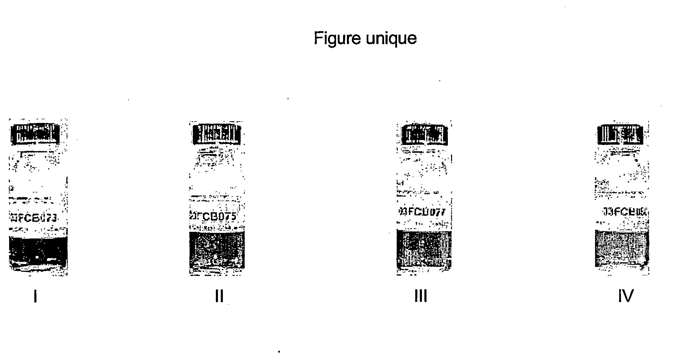

Les essais réalisés sont rassemblés dans le tableau I ci-dessous. La couleur des mélanges obtenus après traitement thermique est illustrée à la figure 1 qui est une photographie des flacons obtenus dans les essais réalisés.

| Essai | 1 | 2 | 3 | 4 |
|---|---|---|---|---|
| Additif stabilisant | - | Na2Co3 | MgO | Hydrotalcite (i) |
| Flaçon | I | II | III | IV |

### (i) hydrotalcite commercialisée par la société SUD CHEMIE sous le nom EXM 696.

Ces résultats obtenus montrent clairement l'effet stabilisant des additifs testés.

### Exemples 5 à 7

Des compositions à base de polyamide 66 contenant 30% en poids de fibres de verre ont été réalisées.

Ces compositions contiennent des quantités variables d'agent ignifugeant et d'agent stabilisant.

### -Préparation d'un agent ignifugeant imprégné sur un support silice

La silice de grande porosité utilisée est une silice appelée TIXOSIL 38X de la société RHODIA ayant un volume poreux total de 4,2 ml/g et un volume utile de 2,2 ml/g.

La quantité d'AMGARD concentré utilisée pour l'imprégnation correspond à la quantité maximale qu'il est possible d'imprégner sur la silice c'est à dire le volume pour lequel on obtient la saturation de la silice.

L'imprégnation se fait à sec. On ajoute l'AMGARD 1045 préalablement chauffé à 80°C afin de le rendre plus fluide de 25 ml au goutte à goutte.

On pèse 25 grammes de silice. Le volume maximum atteint imprégné est de 50 ml d'AMGARD 1045 soit 63 g.

Le produit final est donc composé de 55% en poids d'AMGARD 1045 et de 45% de silice.

Il se présente sous la forme d'une poudre dont le Diamètre (D50) de la répartition granulométrique est de 250µm. D50, dans le domaine de la granulométrie des poudres est le diamètre ou taille de particules pour lequel 50% en poids des particules ont un diamètre inférieur et 50% en poids ont un diamètre supérieur.

Le composé sera appelé ci-après ignifugeant A.

### -Préparation de composition ignifugée à base de polyamide

Le produit ignifugeant A obtenu ci-dessus, est incorporé dans une matrice polyamide 66 ou polyamide 6 en milieu fondu à l'aide d'une extrudeuse mono ou bivis avec 30% de fibre de verre. Le mélange est extrudé généralement sous forme de joncs qui sont coupés pour obtenir des granulés.

Ces granulés sont utilisés comme matière première pour alimenter les procédés de fabrication d'articles moulés ignifugés par injection, moulage, extrusion soufflage ou par tout autre procédé de mise en forme d'articles.

Les propriétés de ces compositions sont mesurées à partir d'éprouvettes obtenues par injection à partir de granulés d'une composition de polyamide.

### Préparation d'éprouvettes en polyamide 66 ignifugé

### Préparation de granulés

On extrude une composition de polyamide 66 comprenant 30% de fibres de verre dans une extrudeuse bivis LEISTRITZ avec un débit compris entre 6 et 7 kg / heure, en imposant un profil de température de 250°C en moyenne, et une pression en zone de dégazage d'environ 400 mbar. La pression matière mesurée à la filière est voisine de 8 bar.

On additionne l'ignifugeant A et un agent stabilisant au moyen de doseurs de façon à obtenir un taux d'ignifugeant A dans le polymère de 13% ou 16% en poids par rapport à la composition finale. Les joncs obtenus sont coupés en granulés.

### -Préparation des éprouvettes

Les éprouvettes sont obtenues par injection dans des conditions standards, des granulés obtenus ci-dessus, sur une presse Billon de 85 tonnes, avec un temps de cycle de 40 secondes, une température de moule de 80°C et un profil de température imposé au fourreau de 250°C. Les éprouvettes obtenues de forme normalisée pour la mise en oeuvre du test UL-94 de détermination des propriétés d'ignifugation. Des éprouvettes d'épaisseur 0.8 mm ont été réalisées.

### Détermination du comportement au feu des éprouvettes de polyamide

Le comportement au feu des échantillons obtenus ci-dessus est déterminé selon le test UL-94 édité par les « Underwriters Laboratories » décrit dans la nome ISO 1210 :1992 (F). Ce test est réalisé avec des éprouvettes d'épaisseur 0.8 mm.

Les résultats obtenus pour les éprouvettes ci-dessus sont rassemblés dans le tableau Il ci-dessous. Avant réalisation du test UL-94, les éprouvettes sont conditionnées par maintien pendant 48 heures à 23°C dans une atmosphère présentant un degré d'humidité relative de 50%.

Par ailleurs le GWFT a été déterminé selon la méthode normalisée On mesure la capacité à l'extinction d'une flamme provoquée par l'application d'un fil incandescent (GWFT) selon la norme IEC 60695-2-12 sur des éprouvettes d'épaisseur de 1,0 mm et de surface 80x80 mm, à une température de 960°C. On note que la composition passe avec succès le test lorsqu'il y a inflammation durant l'application du fil incandescent mais auto-extinction dans les 30 secondes après enlèvement dudit fil incandescent. On note que la composition échoue au test lorsqu'il y a inflammation durant l'application du fil incandescent et pas d'auto extinction dans les 30 secondes après enlèvement dudit fil incandescent. Le test est passé avec succès lorsque les trois éprouvettes différentes confirment successivement la même température.

Le tableau Il ci-dessous indique les différentes caractéristiques et propriétés des compositions obtenues

| | 6 | 7 | 8 |
|---|---|---|---|
| | Composition A | Composition B | Composition C |
| | PA66+30%FV +13% ignifugeant A + 5% Melem | PA66+30%FV +16% ignifugeant A+ 3% Melem | PA66 + 30% FV + 13% ignifugeant A |
| UL 94 | VO | VO | V1 |
| GWFT | 960 °C | 960 °C | 900 °C |
| Coloration | Marron Clair | Marron Clair | noir |

Ces essais démontrent l'effet de stabilisation du mélem ainsi que l'amélioration des propriétés ignifugeantes.

## Revendications

1. Système ignifugeant pour matières polymériques **caractérisé en ce qu'**il comprend un composé à base de phosphore choisi dans le groupe comprenant les esters et sels d'acides phosphoriques, phosphiniques, phosphoniques, imprégné sur un support solide poreux et au moins un composé stabilisant choisi dans le groupe des composés capteurs de fonction acide et des dérivés ou produits de condensation de la mélamine, le rapport en poids du composé stabilisant au composé phosphoré est compris entre 30 % et 80 %.

2. Système ignifugeant selon la revendication 1, **caractérisé en ce que** le composé phosphore est choisi dans le groupe comprenant le méthyl ester de l'acide phosphonique methyl-, bis[(5-ethyl-2-methyl-2-oxido-1,3,2-dioxaphosphorinan-5-yl)methyl] seul ou en mélange avec le méthyl ester de l'acide phosphonique methyl-, (5-ethyl-2-methyl-2-oxido-1,3,2-dioxaphosphorinan-5-yl)methyl, le résorcinol bis (diphényl phosphate), le bisphénol A bis (diphényl phosphate), les esters de polyphosphate, l'acide diéthyl phophinique, l'acide éthylméthyl phosphinique, l'acide méthyl-n-propyl phosphinique leurs mélanges, esters et sels

3. Système ignifugeant selon la revendication 1 ou 2 **caractérisé en ce que** le composé stabilisant est choisi dans le groupe comprenant les carbonates de métaux alcalins et alcalino-terreux, les hydrotalcites, les aluminosilicates.

4. Système ignifugeant selon la revendication 1 ou 2, **caractérisé en ce que** le composé stabilisant est choisi dans le groupe comprenant les produits de condensation de la mélamine et leurs dérivés et les dérivés de la mélamine.

5. Système ignifugeant selon la revendication 4, **caractérisé en ce que** les produits de condensation de la mélamine sont choisis dans le groupe comprenant le mélem, le mélam, le mélon et leurs mélanges et les dérivés de la mélamine dans le groupe comprenant le cyanurate, le phosphate, les polyphosphates de mélamine.

6. système ignifugeant selon la revendication 5, **caractérisé en ce que** le support solide poreux est un oxyde minéral choisi parmi la silice, l'alumine, la silice-alumine, le silico-aluminate de sodium, le silicate de calcium, le silicate de magnésium, la zircone, l'oxyde de magnésium, l'oxyde de calcium, l'oxyde de cérium ou l'oxyde de titane.

7. Système ignifugeant selon l'une des revendications 1 à 6, **caractérisé en ce que** le support solide poreux est une silice.

8. Composition à base de matière polymérique ignifugée, **caractérisée en ce qu'**elle comprend un système d'ignifugation comprenant un composé à base de phosphore choisi dans le groupe comprenant les esters et sels d'acides phosphoniques, phosphiniques, phosphoriques le composé phosphoré, imprégné sur un support solide poreux et au moins un composé stabilisant choisi dans le groupe des composés capteurs de fonction acide et des dérivés de condensation de la mélamine, le rapport en poids du composé stabilisant au composé phosphoré est compris entre 30 % et 80%

9. Composition selon la revendication 8, **caractérisée en ce que** la concentration pondérale en composé phosphoré, exprimée en poids de phosphore dans la composition est comprise entre 5 % et 15 % par rapport au poids total de composition.

10. Composition selon la revendication 8 ou 9, **caractérisée en ce que** la matière polymérique est choisie dans le groupe comprenant les polymères thermodurcissables, thermoplastiques, les élastomères.

11. Composition selon la revendication 10, **caractérisée en ce que** les polymères thermoplastiques sont choisis dans le groupe comprenant les polyoléfines, les polyamides, polyesters, polycarbonates, polymères styréniques, polyuréthannes, polyépoxydes, leurs copolymères et mélanges.

12. Composition selon la revendication 11 **caractérisée en ce que** les polymères thermoplastiques sont choisis dans le groupe comprenant les polyamides 6/11, 4/6, 66/6, 6/66,11,12, 4, 6. 6.6, 6 ;9, 6 ;19, 6.12, 6.18, 6.36; les polyamides branchés, leur copolymères et mélanges.

13. Composition selon la revendication 11, **caractérisée en ce que** les polymères thermoplastiques sont choisis dans le groupe comprenant le polyéthylène téréphtalate, polypropylène téréphtalate, polybutylène téréphtalate, poly 1, 4 diméthylcyclohexane téréphtalate, leurs copolymères et mélanges.

14. Composition selon l'une des revendications 8 à 13 **caractérisée en ce qu'**elle comprend des charges de remplissage, de renfort, des additifs de stabilisation chaleur et lumière, des additifs d'aide au moulage, des lubrifiants.

15. Composition selon l'une des revendications 8 à 14, **caractérisée en ce que** le composé phosphoré est imprégné sur un support solide poreux.

16. Composition selon la revendication 15, **caractérisée en ce que** le support solide poreux est un oxyde minéral choisi parmi la silice, l'alumine, la silice-alumine, le silico-aluminate de sodium, le silicate de calcium, le silicate de magnésium, la zircone, l'oxyde de magnésium, l'oxyde de calcium, l'oxyde de cérium ou l'oxyde de titane.

17. Composition selon la revendication 17, **caractérisée en ce que** le support solide poreux est une silice.

## Claims

1. Flame-retardant system for polymers, **characterized in that** it comprises a phosphorus-based compound chosen from the group consisting of esters and salts of phosphoric, phosphinic and phosphonic acids impregnated on a porous solid support and at least one stabilizing compound chosen from the group of the compounds which are scavengers of acid functional group and melamine condensation products or derivatives, the ratio by weight of the stabilizing compound to the phosphorus-comprising compound being between 30% and 80%.

2. Flame-retardant system according to Claim 1, **characterized in that** the phosphorus-comprising compound is chosen from the group consisting of the bis[(5-ethyl-2-methyl-2-oxido-1,3,2-dioxaphosphorinan-5-yl)methyl] ester of methylphosphonic acid, alone or as a mixture with the methyl and (5-ethyl-2-methyl-2-oxido-1,3,2-dioxaphosphorinan-5-yl)methyl ester of methylphosphonic acid, resorcinol bis(diphenyl phosphate), bisphenol A bis(diphenyl phosphate), polyphosphate esters, diethylphophinic acid, ethylmethylphosphinic acid, methyl(n-propyl)phosphinic acid, and their mixtures, esters and salts.

3. The flame-retardant system according to Claim 1 or 2, **characterized in that** the stabilizing compound is chosen from the group consisting of alkali metal and alkaline earth metal carbonates, hydrotalcites and aluminosilicates.

4. Flame-retardant system according to Claim 1 or 2, **characterized in that** the stabilizing compound is chosen from the group consisting of melamine condensation products and their derivatives and melamine derivatives.

5. Flame-retardant system according to Claim 4, **characterized in that** the melamine condensation products are chosen from the group consisting of melem, melam, melon and their mixtures and the melamine derivatives from the group consisting of melamine cyanurate, phosphate and polyphosphates.

6. Flame-retardant system according to Claim 5, **characterized in that** the porous solid support is an inorganic oxide chosen from silica, alumina, silica/alumina, sodium silicoaluminate, calcium silicate, magnesium silicate, zirconia, magnesium oxide, calcium oxide, cerium oxide or titanium oxide.

7. Flame-retardant system according to one of Claims 1 to 6, **characterized in that** the porous solid support is a silica.

8. Flame-retarded polymer-based composition, **characterized in that** it comprises a flame-retardant system comprising a phosphorus-based compound chosen from the group consisting of esters and salts of phosphonic, phosphinic and phosphoric acids impregnated on a porous solid support and at least one stabilizing compound chosen from the group of the compounds which are scavengers of acid functional group and melamine condensation derivatives, the ratio by weight of the stabilizing compound to the phosphorus-comprising compound being between 30% and 80%.

9. Composition according to Claim 8, **characterized in that** the concentration by weight of phosphorus-comprising compound, expressed as weight of phosphorus, in the composition is between 5% and 15% with respect to the total weight of the composition.

10. Composition according to Claim 8 or 9, **characterized in that** the polymer is chosen from the group consisting of thermosetting polymers, thermoplastic polymers and elastomers.

11. Composition according to Claim 10, **characterized in that** the thermoplastic polymers are chosen from the group consisting of polyolefins, polyamides, polyesters, polycarbonates, styrene polymers, polyurethanes, polyepoxides, and their copolymers and blends.

12. Composition according to Claim 11, **characterized in that** the thermoplastic polymers are chosen from the group consisting of the polyamides 6/11, 4/6, 66/6, 6/66, 11, 12, 4, 6, 6.6, 6.9, 6.19, 6.12; 6.18, 6.36; branched polyamides, and their copolymers and blends.

13. Composition according to Claim 11, **characterized in that** the thermoplastic polymers are chosen from the group consisting of poly(ethylene terephthalate), poly(propylene terephthalate), poly(butylene terephthalate), poly(1,4-dimethylcyclohexane terephthalate), and their copolymers and blends.

14. Composition according to one of Claims 8 to 13, **characterized in that** it comprises bulking fillers, reinforcing fillers, additives for heat or light stabilization, moulding aids or lubricants.

15. Composition according to one of Claims 8 to 14, **characterized in that** the phosphorus-comprising compound is impregnated on a porous solid support.

16. Composition according to Claim 15, **characterized in that** the porous solid support is an inorganic oxide chosen from silica, alumina, silica/alumina, sodium silicoaluminate, calcium silicate, magnesium silicate, zirconia, magnesium oxide, calcium oxide, cerium oxide or titanium oxide.

17. Composition according to Claim 16, **characterized in that** the porous solid support is a silica.

## Patentansprüche

1. Flammschutzsystem für Polymermaterial, **dadurch gekennzeichnet, daß** es eine auf Phosphor basierende Verbindung aus der Gruppe enthaltend Ester und Salze von Phosphorsäuren, Phosphinsäuren und Phosphonsäuren, die auf einem porösen festen Träger imprägniert ist, und mindestens eine stabilisierend wirkende Verbindung aus der Gruppe von Säurefunktionen abfangenden Verbindungen und Melaminderivaten oder -kondensationsprodukten enthält, wobei das Gewichtsverhältnis der stabilisierend wirkenden Verbindung zu der Phosphorverbindung zwischen 30% und 80% liegt.

2. Flammschutzsystem nach Anspruch 1, **dadurch gekennzeichnet, daß** die Phosphorverbindung aus der Gruppe enthaltend Methylphosphonsäurebis[(5-ethyl-2-methyl-2-oxido-1,3,2-dioxaphosphorinan-5-yl)-methyl]ester alleine oder in Abmischung mit Methylphosphonsäure-methyl-(5-ethyl-2-methyl-2-oxido-1,3,2-dioxaphosphorinan-5-yl)methylester, Resorcinolbis(diphenylphosphat), Bisphenol-A-bis-(diphenylphosphat), Polyphosphatestern, Diethylphosphinsäure, Ethylmethylphosphinsäure, Methyl-n-propylphosphinsäure und Mischungen, Estern und Salzen davon ausgewählt ist.

3. Flammschutzsystem nach Anspruch 1 oder 2, **dadurch gekennzeichnet, daß** die stabilisierend wirkende Verbindung aus der Gruppe enthaltend Alkali- und Erdalkalimetallcarbonate, Hydrotalcite und Aluminosilicate ausgewählt ist.

4. Flammschutzsystem nach Anspruch 1 oder 2, **dadurch gekennzeichnet, daß** die stabilisierend wirkende Verbindung aus der Gruppe enthaltend Melaminkondensationsprodukte und Derivate davon und Melaminderivate ausgewählt ist.

5. Flammschutzmittel nach Anspruch 4, **dadurch gekennzeichnet, daß** die Melaminkondensationsprodukte aus der Gruppe enthaltend Melem, Melam, Melon und Mischungen davon und die Melaminderivate aus der Gruppe enthaltend Melamincyanurat, -phosphat und -polyphosphate ausgewählt sind.

6. Flammschutzsystem nach Anspruch 5, **dadurch gekennzeichnet, daß** es sich bei dem porösen festen Träger um ein unter Siliciumdioxid, Aluminiumoxid, Siliciumdioxid-Aluminiumoxid, Natriumaluminiumsilicat, Calciumsilicat, Magnesiumsilicat, Zirkon, Magnesiumoxid, Calciumoxid, Ceroxid oder Titanoxid ausgewähltes anorganisches Oxid handelt.

7. Flammschutzsystem nach einem der Ansprüche 1 bis 6, **dadurch gekennzeichnet, daß** es sich bei dem porösen festen Träger um ein Siliciumdioxid handelt.

8. Flammgeschützte Zusammensetzung auf Basis von Polymermaterial, **dadurch gekennzeichnet, daß** sie ein Flammschutzsystem, das eine auf Phosphor basierende Verbindung aus der Gruppe enthaltend Ester und Salze von Phosphonsäuren, Phosphinsäuren und Phosphorsäuren, die auf einem porösen festen Träger imprägniert ist, und mindestens eine stabilisierend wirkende Verbindung aus der Gruppe von Säurefunktionen abfangenden Verbindungen und Melaminkondensationsderivaten enthält, wobei das Gewichtsverhältnis der stabilisierend wirkenden Verbindung zu der Phosphorverbindung zwischen 30% und 80% liegt, enthält.

9. Zusammensetzung nach Anspruch 8, **dadurch gekennzeichnet, daß** die Gewichtskonzentration der Phosphorverbindung, ausgedrückt als Gewicht von Phosphor in der Zusammensetzung, zwischen 5 und 15%, bezogen auf das Gesamtgewicht der Zusammensetzung, liegt.

10. Zusammensetzung nach Anspruch 8 oder 9, **dadurch gekennzeichnet, daß** das Polymermaterial aus der Gruppe enthaltend wärmehärtbare Polymere, thermoplastische Polymere und Elastomere ausgewählt ist.

11. Zusammensetzung nach Anspruch 10, **dadurch gekennzeichnet, daß** die thermoplastischen Polymere aus der Gruppe enthaltend Polyolefine, Polyamide, Polyester, Polycarbonate, Styrolpolymere, Polyurethane, Polyepoxide, Copolymere und Mischungen davon ausgewählt sind.

12. Zusammensetzung nach Anspruch 11, **dadurch gekennzeichnet, daß** die thermoplastischen Polymere aus der Gruppe enthaltend die Polyamide 6/11, 4/6, 66/6, 6/66, 11, 12, 4, 6, 6.6, 6;9, 6;19, 6.12, 6.18, 6.36, verzweigte Polyamide, Copolymere und Mischungen davon ausgewählt sind.

13. Zusammensetzung nach Anspruch 11, **dadurch gekennzeichnet, daß** die thermoplastischen Polymere aus der Gruppe enthaltend Polyethylenterephthalat, Polypropylenterephthalat, Polybutylenterephthalat, Poly-1,4-dimethylcyclohexanterephthalat, Copolymere und Mischungen davon ausgewählt sind.

14. Zusammensetzung nach einem der Ansprüche 8 bis 13, **dadurch gekennzeichnet, daß** sie streckende Füllstoffe, verstärkende Füllstoffe, Wärme- und Lichtstabilisierungsadditive, Abformhilfsmittel und/oder Gleitmittel enthält.

15. Zusammensetzung nach einem der Ansprüche 8 bis 14, **dadurch gekennzeichnet, daß** die Phosphorverbindung auf einem porösen festen Träger imprägniert ist.

16. Zusammensetzung nach Anspruch 15, **dadurch gekennzeichnet, daß** es sich bei dem porösen festen Träger um ein unter Siliciumdioxid, Aluminiumoxid, Siliciumdioxid-Aluminiumoxid, Natriumaluminiumsilicat, Calciumsilicat, Magnesiumsilicat, Zirkon, Magnesiumoxid, Calciumoxid, Ceroxid oder Titanoxid ausgewähltes anorganisches Oxid handelt.

17. Zusammensetzung nach Anspruch 16, **dadurch gekennzeichnet, daß** es sich bei dem porösen festen Träger um ein Siliciumdioxid handelt.
